# EUROPÄISCHE PATENTSCHRIFT

(11) **EP 0 709 240 B1**
(45) Veröffentlichungstag und Bekanntmachung des Hinweises auf die Patenterteilung: **13.05.1998**
(21) Anmeldenummer: 95114854.3
(22) Anmeldetag: 21.09.1995
(51) Int. Cl.: B60G 17/015, B60Q 1/08

(54) **Leuchtweitenregelung an einem Fahrzeug**
Light beam control on a vehicle
Réglage de la portée des phares d'un véhicule

(30) Priorität: 24.10.1994 DE 4437949
(43) Veröffentlichungstag der Anmeldung: 01.05.1996
(73) Patentinhaber: DAIMLER-BENZ AKTIENGESELLSCHAFT, 70567 Stuttgart (DE)
(72) Erfinder: Kutscher, Eberhard, Dipl-Ing., D-71672 Marbach (DE); Scheerer, Hans, Dipl.-Ing., D-73734 Esslingen (DE); Hamann, Dirk, Dipl.-Ing., D-71384 Weinstadt (DE)

(56) Entgegenhaltungen:
- EP-A- 0 470 408
- EP-A- 0 545 130
- EP-A- 0 652 134
- DE-A- 1 963 115
- DE-A- 3 335 861
- DE-A- 3 932 475
- US-A- 5 430 647
- ATZ AUTOMOBILTECHNISCHE ZEITSCHRIFT, Bd. 95, Nr. 9, 1.September 1993, Seiten 466-469, XP000390506 TOOP C: "DYNAMISCHE LEUCHTWEITEREGELUNG"
- PATENT ABSTRACTS OF JAPAN vol. 009, no. 098 (M-375), 27.April 1985 & JP-A-59 223531 (HONDA GIKEN KOGYO KK), 15.Dezember 1984,
- PATENT ABSTRACTS OF JAPAN vol. 009, no. 282 (M-428), 9.November 1985 & JP-A-60 124546 (NIPPON DENSO KK), 3.Juli 1985,

## Beschreibung

Die Erfindung betrifft eine dynamische Leuchtweitenregelung von automatisch verstellbaren Scheinwerfern eines Fahrzeuges mit einer dessen Längsbeschleunigung bzw. -verzögerung erfassenden Vorrichtung.

Ein derartiges System ist Gegenstand der EP 04 70 408 A1. Nach dieser Druckschrift ist vorgesehen, Mittelwerte des Abstandes zwischen Fahrzeugaufbau und Vorderachse sowie des Abstandes zwischen Fahrzeugaufbau und Hinterachse zu erfassen und durch Ermittlung einer Differenz dieser Mittelwerte ein Maß für die jeweils notwendige Verstellung der Scheinwerfer zu ermitteln. Die Zeitspanne für die vorgenannte Mittelwertbildung wird in Abhängigkeit von der Längsbeschleunigung bzw. -verzögerung des Fahrzeuges verändert, d.h. verkürzt, um die bei Beschleunigung bzw. Verzögerung des Fahrzeuges auftretenden relativ schnellen Nickbewegungen des Fahrzeugaufbaus aktuell erfassen zu können. Im übrigen ist vorgesehen, jeweils gegeneinander zeitversetzte Mittelwerte des Abstandes zwischen Aufbau und Vorderachse sowie des Abstandes zwischen Aufbau und Hinterachse zur Differenzbildung heranzuziehen. Dadurch kann gewährleistet werden, daß die miteinander zur Differenzbildung verknüpften Mittelwerte jeweils aus Zeitspannen stammen, zu denen die Vorder- bzw. Hinterräder über den gleichen Fahrbahnabschnitt hinweggerollt sind.

Die nicht vorveröffentlichte EP 06 52 134 A1, welche auf einer Anmeldung mit besserer Priorität beruht, bezieht sich auf ein System, bei dem die Scheinwerfer jeweils um ein von der Längsbeschleunigung bzw. -verzögerung des Fahrzeuges abhängiges Maß verstellt werden. Dabei wird die Längsbeschleunigung bzw. -verzögerung aus den Tachometersignalen oder mittels eines Beschleunigungssensors ermittelt.

Aus der DE 30 22 939 A1 ist eine im wesentlichen mechanisch arbeitende Vorrichtung mit Trägheitspendel bekannt, dessen Bewegungen relativ zum Fahrzeug mittels eines Gestänges auf verstellbare Scheinwerfer des Fahrzeuges übertragen wird, um die andernfalls aufgrund von Nickbewegungen des Fahrzeuges beim Bremsen bzw. Beschleunigungen auftretenden Änderungen der Leuchtweite zu kompensieren. Dabei ist diese bekannte Anordnung so ausgebildet, daß ein Gefälle bzw. eine Steigung der Fahrbahn keine größeren Auswirkungen auf die Verstellung der Scheinwerfer relativ zum Fahrzeug haben.

Aus der DE-AS 16 80 301 ist eine Steuereinrichtung mit Trägheitsorgan zur Unterbindung einer Niveauregelung während der Beschleunigung oder Verzögerung eines Fahrzeuges bekannt, dessen Federung mit einer hydraulischen und/oder pneumatischen Niveauregeleinrichtung ausgestattet ist. Dadurch kann der Energiebedarf für die Niveauregelung abgesenkt werden.

Die DE 39 17 245 C2 bezieht sich auf ein System zum Ausgleich von Lageänderungen eines Fahrzeuges, welche beim Einsetzen einer Antischlupfregelung (ASR) auftreten. Die beim Beschleunigen eines Fahrzeuges auftretenden Nickbewegungen eines Fahrzeuges verändern sich, wenn das ASR-System ein durchdrehendes Antriebsrad zwangsweise abbremst, denn dabei treten auch dann, wenn gleichzeitig die Leistung des Fahrzeugmotors automatisch herabgeregelt wird, zusätzliche Reaktionsmomente auf, die zu Bewegungen des Fahrzeugaufbaus führen, die für den Fahrer ungewohnt sind. Dies wird nun durch das System der DE 39 17 245 C2 vermieden.

Die US 51 03 396 betrifft ein Fahrzeug mit beschleunigungsabhängig arbeitendem aktiven Federungssystem, wobei zur Ermittlung der Längs-, Quer- und Vertikalbeschleunigungen des Fahrzeuges gesonderte Beschleunigungssensoren vorgesehen sind.

Aus der EP 05 45 130 A2 ist es bekannt, aus Signalen von Antiblockiersystemen (ABS) bzw. einer Antischlußregelung (ASR) einen Schaltwert abzuleiten, um die Fahrwerksregelung beim Bremsen bzw. Beschleunigen im Sinne eines maximalen Fahrbahnkontaktes zu steuern.

Aufgabe der Erfindung ist es nun, eine Leuchtweitenregelung mit hoher Zuverlässigkeit und vergleichsweise geringem konstruktiven Aufwand zu verwirklichen.

Diese Aufgabe wird erfindungsgemäß dadurch gelöst, daß das Fahrzeug ein System zur Schlupfbegrenzung gebremster bzw. angetriebener Räder mit den Rädern zugeordneten Drehzahlsensoren aufweist, deren Signale von der dynamischen Leuchtweitenregelung in eine zur Längsbeschleunigung bzw. -verzögerung des Fahrzeuges analoge Verstellung der Scheinwerfer umsetzbar sind.

Die Erfindung beruht auf dem allgemeinen Gedanken, daß aus den Raddrehzahlen von mit Schlupbegrenzung drehenden Rädern eines Fahrzeuges ohne weiteres rechnerisch, d.h. mathematisch im Sinne einer Differentiation bzw. im Sinne der Bildung eines Differenzenquotienten, die Längsbeschleunigung bzw. -verzögerung des Fahrzeuges nach Betrag und Richtung ermittelt werden kann. Damit lassen sich gleichzeitig Erfahrungswerte für die mit den jeweils ermittelten Beschleunigungen bzw. Verzögerungen einhergehenden dynamischen Änderungen des Niveaus bzw. Bodenabstandes des Fahrzeuges, insbesondere der bei Verzögerung bzw. Beschleunigung auftretenden Nickbewegung des Fahrzeuges, angeben und zur Leuchtweitensteuerung der Scheinwerfer ausnutzen.

Ein besonderer Vorzug der Erfindung liegt darin, daß die Signale von fahrzeugseitigen Systemen ausgenutzt werden können, die im Hinblick auf die Fahrzeugsicherheit ohnehin vorhanden und auf höchste Zuverlässigkeit ausgelegt sind. Im Ergebnis können also die Nickbewegungen, die ein Fahrzeug beim Beschleunigen oder beim Verzögern (Abbremsen) ausführt und deren Maß durch die Größe und Richtung der jeweiligen Längsbeschleunigung weitestgehend bestimmt wird, hinsichtlich der Leuchtweite mit hoher Zuverlässigkeit kompensiert werden.

Ein Vorteil der Erfindung liegt unter anderem darin, daß der mittlere Bodenabstand bzw. das mittlere Niveau des Fahrzeuges nicht unbedingt ermittelt werden muß.

Beispielsweise ist es bekannt, zur Leuchtweitensteuerung von Scheinwerfern an Personenkraftwagen am Armaturenbrett eine Handhabe (Stellrad) in Abhängigkeit von der Insassenzahl und der Beladung des Kofferraumes auf unterschiedliche Markierungen einzustellen und damit die Scheinwerfer entsprechend zu verstellen, so daß eine weitestgehend beladungsunabhängige Leuchtweite erreicht wird. Aufgrund der Erfindung werden dann auch automatisch die dynamischen Änderungen des Niveaus bzw. Bodenabstandes aufgrund von Längsbeschleunigungen bzw. -verzögerungen des Fahrzeuges kompensiert.

Soweit das Fahrzeug mit einer Niveauregelung ausgerüstet ist, ist zweckmäßigerweise vorgesehen, dieselbe so zu steuern, daß durch Längsbeschleunigungen bzw. -verzögerungen des Fahrzeuges erfolgende Änderungen des Niveaus bzw. Bodenabstandes nicht kompensiert werden und die Leuchtweitenregelung beim Beschleunigen bzw. Verzögern des Fahrzeuges keine Eingriffe der Niveauregelung zu berücksichtigen hat.

Dazu kann beispielsweise vorgesehen sein, die Sollwertvorgabe des Niveauregelsystems unter Ausnutzung der Signale über die Längsbeschleunigung bzw. -verzögerung des Fahrzeuges derart zu verändern, daß das Niveauregelsystem bei vorübergehenden Änderungen des Niveaus bzw. Bodenstandes aufgrund von Längsbeschleunigungen bzw. -verzögerungen des Fahrzeuges nicht anspricht. Dazu braucht im Prinzip der normalerweise vorgegebene Sollwert lediglich um ein Maß verändert zu werden, welches der aufgrund der Längsbeschleunigung bzw. -verzögerung zu erwartenden Änderung von Niveau bzw. Bodenabstand entspricht.

Gemäß einer bevorzugten Ausführungsform der Erfindung können gegebenenfalls im Fahrzeug erzeugte Signale, welche die Fahrgeschwindigkeit und/oder die Neigung des Fahrzeuges wiedergeben, zusätzlich berücksichtigt werden.

Die Fahrgeschwindigkeit wird bei praktisch jedem Fahrzeug gemessen, so daß entsprechende Signale ständig vorliegen. Aufgrund von Luftauftriebskräften, die geschwindigkeitsabhängig sind, können - in der Regel allerdings vergleichsweise geringe - Änderungen von Niveau bzw. Bodenabstand auftreten, die durch Auswertung der Geschwindigkeitssignale berücksichtigt werden können.

Ein Neigungssensor ist in Fahrzeugen des öfteren vorhanden, um automatische Schaltgetriebe bedarfsgerechter steuern zu können. Wenn beispielsweise die Getriebesteuerung "weiß", daß das Fahrzeug aufgrund der Fahrtrichtung und Neigung bergauf fährt, so kann ein in diesem Falle unerwünschtes frühzeitiges Hochschalten des Getriebes vermieden werden. Die Signale des Neigungssensors können auch dazu dienen, den Einfluß von Hangabtriebskräften auf den Bodenabstand bzw. das Niveau des Fahrzeuges zu berücksichtigen.

Wird beispielsweise ein Fahrzeug an einer Gefällestrecke in Vorwärtsrichtung abgestellt, so erzeugt die im Schwerpunkt des stehenden Fahrzeuges angreifende Hangabtriebskraft ein Moment, das an der Vorderachse zu einer gewissen Einfederung und an der Hinterachse zu einer gewissen Ausfederung führt. Entsprechendes gilt auch, wenn das Fahrzeug mit konstanter Geschwindigkeit eine Gefällestrecke durchfährt. Das genannte Moment kommt praktisch zum Verschwinden, wenn das Fahrzeug - ohne Behinderung durch Reibung und Luftwiderstand - den Hang hinabrollt.

Da bei der Erfindung ständig der Bewegungszustand des Fahrzeuges registriert wird, können also mittels der Signale des Neigungssensors Änderungen von Niveau bzw. Bodenabstand an Steigungen bzw. Gefällestrecken ermittelt werden.

Im übrigen wird hinsichtlich bevorzugter Merkmale der Erfindung auf die Ansprüche sowie die nachfolgende Erläuterung der Zeichnung verwiesen.

Dabei zeigt
- Fig. 1: ein Diagramm, welches beispielhaft die Fahrgeschwindigkeit v bei einem Fahrmanöver in Abhängigkeit von der Zeit t wiedergibt,
- Fig. 2: ein zugehöriges Diagramm, welches die Beschleunigung b des Fahrzeuges in Fahrzeuglängsrichtung in Abhängigkeit von der Zeit t bei diesem Fahrmanöver zeigt,
- Fig. 3: ein Diagramm, welches den Bodenabstand N des Fahrzeuges im Bereich der Vorderachse bei diesem Fahrmanöver dargestellt, und
- Fig. 4: eine schematisierte Draufsicht auf ein Fahrzeug mit erfindungsgemäßer Vorrichtung zur Erfassung von Änderungen des Niveaus bzw. Bodenabstandes.

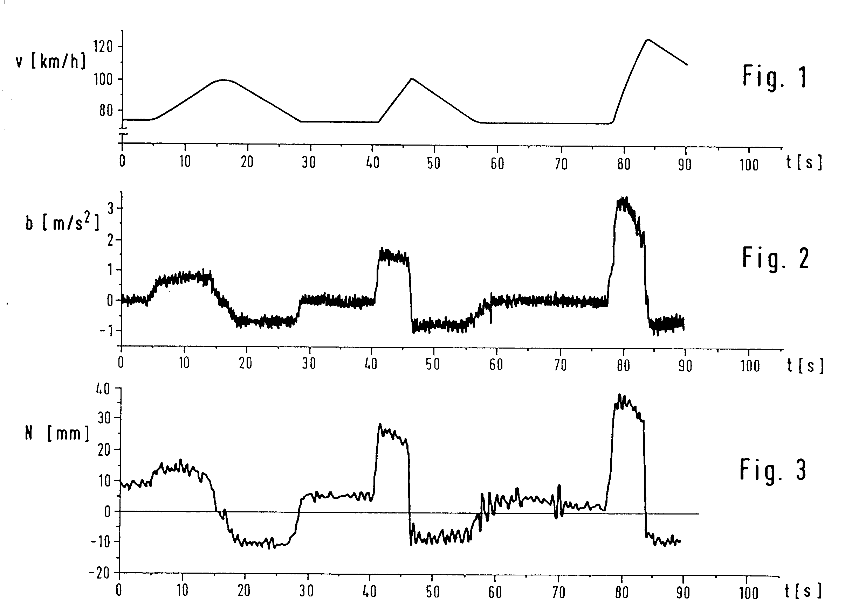

Das Diagramm der Fig. 1 zeigt ein beispielhaftes Fahrmanöver, bei dem das Fahrzeug zunächst mit einer Geschwindigkeit von ca. 75 km/h fährt, danach die Geschwindigkeit erhöht und wieder auf den Ausgangswert vermindert usw.

Das Diagramm der Fig. 2 zeigt nun die Längsbeschleunigung b des Fahrzeuges bei diesen Manövern, wobei die entsprechenden Werte der Beschleunigung b aus den Signalen von Drehzahlgebern ermittelt worden sind, die - etwa für ein ABS-System - den Fahrzeugrädern zugeordnet sind. Da die Raddrehzahlen gewissen Schwankungen unterliegen, die unter anderem auch durch Unebenheiten der Fahrbahnoberfläche hervorgerufen werden, haben die Werte der Beschleunigung b eine gewisse Schwankungsbreite bzw. Streuung, die durch Mittelwertbildung kompensiert werden kann.

Das Diagramm der Fig. 3 zeigt nun die zugehörigen Meßwerte des Niveaus bzw. Bodenabstandes des Fahrzeuges im Bereich der Vorderachse, wobei im dargestellten Beispiel die Signale von Meßwertgebern zwischen Fahrzeugaufbau und Vorderachse graphisch dargestellt sind.

Es ist erkennbar, daß diese Meßkurve eine weitestgehende Anologie zum Verlauf der Beschleunigung b in Fig. 2 hat. Dementsprechend braucht also die Änderung des Bodenabstandes bzw. des Niveaus des Fahrzeuges im Bereich der Vorderachse nicht unbedingt mittels gesonderter Meßwertgeber ermittelt zu werden, die durch Bewegungen der Vorderräder bzw. der Vorderachse relativ zum Fahrzeugaufbau gesteuert werden. Vielmehr stellen die gemäß Fig. 2 aufgezeichneten Werte der Längsbeschleunigung des Fahrzeuges ein analoges Maß für die Änderungen des Niveaus bzw. Bodenabstandes dar, so daß diese Änderungen unmittelbar aus den Meßwerten der Längsbeschleunigung ermittelt werden können. Mathematisch bedeutet dies lediglich, daß die Werte der Längsbeschleunigung mit einem - gegebenenfalls beschleunigungsabhängigen - Faktor multipliziert werden müssen, welcher durch Fahrversuche ermittelt werden kann.

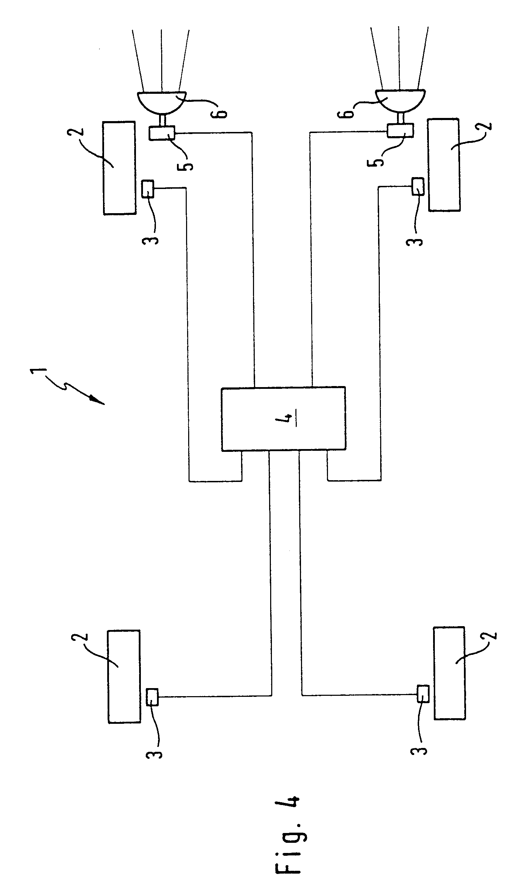

Bei dem in Fig. 4 schematisiert dargestellten Fahrzeug 1 sind den Rädern 2 jeweils Drehzahlsensoren 3 zugeordnet, deren Signale in grundsätzlich bekannter Weise einer Steuerschaltung 4 zugeführt werden, die einem ABS- bzw. ASR-System zugeordnet ist und durch entsprechende Ansteuerung der Radbremsen (nicht dargestellt) ein Blockieren der Räder bei Bremsmanövern bzw. einen übermäßigen Schlupf der Antriebsräder beim Beschleunigen verhindern kann.

Erfindungsgemäß ist nun vorgesehen, daß diese Steuerschaltung 4 zusätzlich durch Auswertung der Raddrehzahlen Signale über die Längsbeschleunigung des Fahrzeuges und damit über Änderungen des Niveaus bzw. Bodenabstandes des Fahrzeuges zur Verfügung stellt.

Mittels dieser Signale können beispielsweise Stellorgane 5 gesteuert werden, welche mit Fahrzeugscheinwerfern 6 antriebsmäßig gekoppelt sind. Auf diese Weise läßt sich erreichen, daß die jeweils vorgesehene Leuchtweite der Scheinwerfer auch bei Änderungen des Bodenabstandes bzw. Niveaus des Fahrzeuges, insbesondere bei Nickbewegungen des Fahrzeugaufbaus infolge von Längsbeschleunigungen, weitestgehend unverändert bleibt.

Durch die Erfindung lassen sich auch solche Fahrzustände erfassen, bei denen sich zwar der Bodenabstand des Fahrzeuges im Bereich einer Achse ändert, jedoch gleichwohl eine Ansteuerung der Stellorgane 5 zur Veränderung der Leuchtweite der Scheinwerfer 6 überflüssig ist. Fährt beispielsweise ein Fahrzeug auf einer ebenen Straße mit konstanter Geschwindigkeit über eine ausgeprägte Bodenwelle, so federt zunächst die Vorderachse und danach die Hinterachse ein. Bei einem optimal abgestimmten Federungssystem des Fahrzeuges bleibt der Fahrzeugaufbau in solchen Fällen praktisch in Ruhe, d.h. der Fahrzeugaufbau führt relativ zu einem fahrbahnfesten Bezugssystem keine bzw. keine nennenswerte Vertikalbewegung aus. Gleichwohl würden den Fahrzeugachsen zugeordnete Niveaugeber beim Überfahren der Bodenwelle vorübergehend einen verminderten Abstand zwischen Fahrzeugaufbau und jeweiliger Fahrzeugachse und damit eine Veränderung des Bodenabstandes registrieren. Ohne besondere Maßnahmen könnten dann die Stellorgane 5 der Fahrzeugscheinwerfer 6 angesteuert werden, um die Leuchtweite zu verändern. Tatsächlich ist jedoch eine derartige Leuchtweitenänderung unerwünscht, weil der Fahrzeugaufbau vertikal ruhig geblieben ist. Wenn nun erfindungsgemäß die Längsbeschleunigung des Fahrzeuges ausgewertet wird, kann eine solche unerwünschte Leuchtweitenänderung ohne weiteres vermieden werden. Bei dem geschilderten Fall, daß eine Bodenwelle mit gleichbleibender Geschwindigkeit überfahren wird, tritt nämlich keinerlei Längsbeschleunigung des Fahrzeuges auf, so daß eine unter Auswertung der Längsbeschleunigung erfolgende Steuerung der Leuchtweite in einem solchen Fall zu keiner Veränderung der Leuchtweiteneinstellung führt, wie es erwünscht ist.

Die Erfindung läßt sich auch mit großem Vorteil zur Verminderung des Energiebedarfes einer Niveauregelung eines Fahrzeuges einsetzen. Indem nämlich die Längsbeschleunigungen des Fahrzeuges und damit die wesentlichen Ursachen für dynamische Änderungen des Bodenabstandes bzw. Niveaus erfaßt werden, besteht die Möglichkeit, bei derartigen dynamischen und dementsprechend nur vorübergehenden Änderungen von einem Regeleingriff abzusehen, d.h. auf Nickbewegungen des Fahrzeugaufbaus, wie sie beim Beschleunigen bzw. Abbremsen des Fahrzeuges auftreten, reagiert die Niveauregelung nicht oder erst mit größerer Verzögerung. Damit wird die Ansprechhäufigkeit der Niveauregelung deutlich vermindert, mit der Folge, daß auch der Energiebedarf der Niveauregelung entsprechend absinkt.

Steuerungstechnisch kann zu diesem Zweck beim Auftreten dynamischer Änderungen des Niveaus bzw. Bodenabstandes die Sollwertvorgabe für das Niveau bzw. den Bodenabstand derart verändert werden, daß keine bzw. praktisch keine soll-Istwert-Abweichung auftritt und dementsprechend auch kein Regeleingriff bewirkt wird.

## Patentansprüche

1. Dynamische Leuchtweitenregelung von automatisch verstellbaren Scheinwerfern (6) eines Fahrzeuges (1) mit einer dessen Längsbeschleunigung bzw. -Verzögerung erfassenden Vorrichtung (3,4),
**dadurch gekennzeichnet,**
daß das Fahrzeug (1) ein System zur Schlupfbegrenzung gebremster bzw. angetriebener Räder (2) mit den Rädern zugeordneten Drehzahlsensoren (3) aufweist, deren Signale von der dynamischen Leuchtweitenregelung (4) in eine zur Längsbeschleunigung bzw. -verzögerung des Fahrzeuges analoge Verstellung der Scheinwerfer (6) umsetzbar sind.

2. Leuchtweitenregelung nach Anspruch 1,
**dadurch gekennzeichnet,**
daß die Signale, welche die durch Längsbeschleunigungen bzw. -verzögerungen verursachten dynamischen Änderungen von Niveau und Bodenabstand wiedergeben, bei der Steuerung einer Niveauregelung des Fahrzeuges derart berücksichtigt werden, beispielsweise durch Veränderung des Soll-Niveaus, daß keine bzw. praktisch keine durch Längsbeschleunigung bzw. -verzögerung bewirkten Änderungen von Niveaus bzw. Bodenabstand ausgeregelt werden.

3. Leuchtweitenregelung nach Anspruch 1 oder 2,
**dadurch gekennzeichnet,**
daß zusätzlich ein Neigungssensor vorhanden ist, mit dessen Signalen der Einfluß von Hangabtriebskräften auf das Niveau bzw. den Bodenabstand erfaßbar ist.

4. Leuchtweitenregelung nach einem der Ansprüche 1 bis 3,
**dadurch gekennzeichnet,**
daß die Fahrgeschwindigkeit registriert wird, um vom Luftwiderstand bewirkte Änderungen des Niveaus bzw. des Bodenabstandes zu erfassen.

## Claims

1. Dynamic headlight-range adjustment system for automatically adjustable headlights (6) of a vehicle (1) having a device (3,4) for detecting the longitudinal acceleration or deceleration of said vehicle (1), characterized in that the vehicle (1) has a system for limiting the slip of braked or driven wheels (2) having rotational speed sensors (3) which are assigned to the wheels and whose signals can be converted by the dynamic headlight-range adjustment system (4) into an adjustment of the headlight (6) which is analogous with the longitudinal acceleration or deceleration of the vehicle.

2. Headlight-range adjustment system according to Claim 1, characterized in that the signals which represent the dynamic changes in level and ground clearance brought about by longitudinal acceleration or deceleration are taken into account during the control of a ride control system of the vehicle, for example by changing the desired level, in such a way that no, or virtually no, changes in level or ground clearance brought about by longitudinal acceleration or deceleration are compensated.

3. Headlight-range adjustment system according to Claim 1 or 2, characterized in that, in addition, an inclination sensor is present, with whose signals the influence of downgrade forces on the level or the ground clearance can be detected.

4. Headlight-range adjustment system according to one of Claims 1 to 3, characterized in that the driving speed is registered in order to detect changes in the level or the ground clearance brought about by the air resistance.

## Revendications

1. Système de régulation dynamique de la portée lumineuse de phares (6) réglables automatiquement d'un véhicule (1), comportant un dispositif (3, 4) détectant une accélération ou une décélération du véhicule,
caractérisé en ce que
le véhicule (1) comporte un système pour limiter le glissement de roues freinées ou de roues motrices (2), comportant des détecteurs de vitesses de roues (3), qui sont associés aux roues et dont les signaux peuvent être convertis par le système dynamique (4) de régulation de la portée lumineuse, en un déplacement des phares (6), analogue à l'accélération longitudinale ou à la décélération longitudinale du véhicule.

2. Système de régulation de portée lumineuse selon la revendication 1, caractérisé en ce
que les signaux, qui reproduisent les variations dynamiques du niveau et de la garde au sol, provoquées par des accélérations longitudinales ou des décélérations longitudinales, sont pris en compte lors de la commande d'une régulation de niveau du véhicule, par exemple par modification du niveau de consigne, de telle sorte qu'aucune modification ou pratiquement aucune modification du niveau ou de la garde au sol, provoquée par une accélération longitudinale ou une décélération longitudinale, ne soit éliminée par réglage.

3. Système de régulation de portée lumineuse selon la revendication 1 ou 2, caractérisé en ce
qu'il est en outre prévu un détecteur d'inclinaison, à l'aide des signaux duquel l'influence des forces s'exerçant dans le sens de la descente de la pente sur le niveau ou la garde au sol peut être détectée.

4. Système de régulation de portée lumineuse selon l'une des revendications 1 à 3, caractérisé en ce que
la vitesse de déplacement est enregistrée de manière à détecter des variations du niveau ou de la garde au sol, provoquées par la résistance de l'air.
